# FASCICULE DE BREVET EUROPEEN

(11) **EP 2 927 991 B1**
(45) Date de publication et mention de la délivrance du brevet: **31.01.2018**
(21) Numéro de dépôt: 15161721.4
(22) Date de dépôt: 30.03.2015
(51) Int. Cl.: H01M 2/10, B60K 1/04, B60L 11/18, H01M 10/613, H01M 10/625, H01M 10/6563

(54) **DISPOSITIF DE STOCKAGE DE CELLULES DE BATTERIE**
VORRICHTUNG ZUM AUFNEHMEN VON BATTERIEZELLEN
DEVICE FOR STORING BATTERY CELLS

(30) Priorité: 02.04.2014 FR 1452903
(43) Date de publication de la demande: 07.10.2015
(73) Titulaire: ECCITY MOTOCYCLES, 06130 Grasse (FR)
(72) Inventeur: Cornillon Christophe, 06130 GRASSE (FR); Gschwind, Sébastien, 06130 Grasse (FR); Barroyer, Jean-Baptiste, 06740 Chateuneuf de Grasse (FR)
(74) Mandataire: Decobert, Jean-Pascal

(56) Documents cités:
- JP-A- 2010 140 753
- JP-A- 2013 105 617
- JP-A- 2013 164 944
- US-A1- 2012 315 510
- US-B1- 6 235 418

## Description

### DOMAINE DE L'INVENTION

La présente invention concerne un dispositif de stockage de cellules de batterie et un véhicule équipé d'un tel dispositif.

L'invention s'applique tout particulièrement aux véhicules automobiles, de préférence du type motocycle, par exemple à deux ou trois roues, présentant une motorisation électrique. L'invention n'exclut pas l'incorporation dans d'autres types de véhicules et notamment dans des véhicules à motorisation hybride.

### ARRIERE-PLAN TECHNOLOGIQUE

Dans ce domaine, l'efficacité des cellules composant une batterie d'accumulateurs électriques est fondamentale et ce au cours de l'ensemble d'une phase d'utilisation du véhicule. Une contrainte notable de telles cellules est la nécessité de réguler en température le volume de stockage occupé par les cellules de sorte à en conserver l'efficacité. En effet, d'une manière générale, les cellules de batterie s'échauffent et la limite supérieure de fonctionnement en température des cellules est de l'ordre de 60°C.

Pour gérer le fonctionnement des batteries et notamment leur montée en température, un système de gestion électronique de batterie est généralement intégré à un dispositif de stockage de batterie pour le sécuriser. Ce système de gestion de batterie, encore appelé en anglais « battery management system », commande un relais interne qui sécurise en tension et courant les bornes de la batterie en sortie. En particulier, le système de gestion de batterie peut stopper le fonctionnement d'une partie ou de l'intégralité d'un pack batterie en coupant sa tension de sortie dès lors qu'une seule de ses cellules dépasse une température donnée, telle que celle de 60°C.

Ainsi, la limitation de la montée en température des cellules de batterie est un problème majeur et qui peut limiter le développement de certains types de véhicules automobiles et en particulier les véhicules à traction électrique. Pour y remédier, on connaît du document FR-A-2 975 535, un caisson permettant de recevoir en position de stockage une pluralité de cellules d'accumulation d'électricité formant une batterie d'accumulateurs.

Selon cette antériorité pour véhicule automobile, le caisson est équipé d'un ventilateur permettant une circulation d'air forcé coopérant avec un circuit fermé de fluide caloporteur. Il y a aussi nécessité d'un système électronique complexe et coûteux de gestion/contrôle de la température.

Le document JP2013105617 A divulgue aussi un stockage de cellules de batteries avec des moyens de ventilation. Cependant, le demandeur a constaté que les dispositifs existants présentaient une efficacité toute relative et qu'ils ne sont pas opérationnels dans des conditions spécifiques et en particulier dans les applications aux véhicules électriques à deux ou trois roues. En effet de telles situations impliquent une forte concentration des cellules électriques alors que ces dernières sont fortement sollicitées. La quantité d'énergie embarquée (par exemple de l'ordre de 5kWh) dans un volume réduit accélère l'échauffement des cellules pendant un usage intense, en vitesse de pointe particulièrement. Il s'ensuit un dégagement de chaleur élevée avec peu de capacité de circulation d'air autour des cellules.

Dans le même temps, les cellules doivent être tenues à l'écart de l'eau et les châssis de cycles n'offrent qu'une faible protection des organes des véhicules contre les intempéries ou les projections d'eau ou de boue ou autre si bien que les échanges avec l'air ambiant sont généralement proscrits. En conséquence, la régulation en température des cellules de batterie est nettement plus délicate dans le domaine des véhicules à deux ou trois roues à motorisation électrique que dans d'autres secteurs, tels que celui des automobiles.

C'est donc un objet de l'invention que de proposer une solution permettant d'améliorer la limitation de l'échauffement en température dans le volume de stockage des cellules de batterie d'accumulation d'électricité et ce, avantageusement, sans électronique de gestion et contrôle de la température, de sorte à être peu coûteux.

### RESUME DE L'INVENTION

Suivant un premier aspect, l'invention décrit un dispositif de stockage de cellules de batterie de véhicule automobile selon la revendication 1.

L'invention ainsi proposée permet un refroidissement suffisant des cellules même dans des situations extrêmes de forte concentration de cellules et d'étanchéité requise. Dans le même temps, elle n'impose pas nécessairement de moyens complexes et donc coûteux tels qu'un système électronique de régulation de température. Mais par son efficacité, l'invention retarde ou évite une coupure de sécurité des batteries par surchauffe, si bien que l'autonomie des véhicules en usage intensif est accrue.

L'invention présente, suivant un deuxième aspect, un véhicule équipé du dispositif de l'invention. La présente divulgation concerne en outre l'utilisation d'une membrane textile pour l'aération du volume de stockage de cellules de batterie.

### BREVE INTRODUCTION DES FIGURES

Les dessins ci-joints sont donnés à titre d'exemples et ne sont pas limitatifs de l'invention. Ils représentent seulement un mode de réalisation de l'invention et permettront de la comprendre aisément.
- La figure 1 présente un vue de côté d'un dispositif selon l'invention dans un mode de réalisation avec une visualisation latérale et la schématisation de certains composants, entrée cachée à ce niveau.
- La figure 2 montre une vue de dessus d'un dispositif selon la figure 1 et la figure 3 en montre une vue de dessous.
- La figure 4 est une vue de profil révélant un exemple de circulation d'un flux de refroidissement issu d'un ventilateur.
- La figure 5 présente une possibilité d'implantation du dispositif de l'invention dans un véhicule du type motocycle à motorisation électrique.

### DESCRIPTION DETAILLEE

Avant de rentrer dans le détail de modes de réalisation de l'invention purement indicatifs, les caractéristiques optionnelles que peut éventuellement présenter l'invention individuellement ou selon toute combinaison entre elles sont ci-après énoncées :
- Le caisson est configuré pour permettre, sur au moins une portion d'une de ses parois, un échange thermique avec l'extérieur ; par exemple au moins une partie d'une paroi est en un matériau de conductivité thermique supérieure ou égale à 40 Wm⁻¹K⁻¹ et/ou une épaisseur inférieure à 3 mm
- la membrane 7 est en matière textile étanche à l'eau ;
- au moins deux éléments d'aération 8 sont disposés à des hauteurs différentes sur le caisson 1 ;
- le dispositif comporte quatre éléments d'aération 8 sur une paroi de capot 4 du caisson 1 et deux éléments d'aération 8 en vis-à-vis et en dessous de la paroi de capot 4 ;
- le dispositif comporte une pluralité de cellules de batterie juxtaposées dans le volume de réception avec au moins un espace intercalaire entre deux cellules ;
- au moins une paroi du caisson 1 est métallique, par exemple en acier ou en aluminium ou alliage ; son épaisseur peut être inférieure ou égale à 2 mm et par exemple de 1,5 mm;
- la réservation 5 présente une paroi arrière opposée au volume de stockage 12 et inclinée de sorte à produire un évasement de la réservation 5 vers le haut ;
- le dispositif comprend au moins un élément d'aération 8 au-dessus du ventilateur 9 et au moins un élément d'aération 8 en dessous du ventilateur 9 ;
- au moins un élément d'aération 8 est situé au droit du ventilateur 9 ;
- le ventilateur 9 présente un axe de flux moyen horizontal.
- le dispositif est situé dans un logement 16 du châssis 14 sur une partie antérieure à une roue arrière 15 du véhicule ;
- la réservation 5 est située sur une zone postérieure du logement 16 ;
- le véhicule est du type motocycle à moteur électrique.

De manière générale dans la présente description, à moins qu'il n'en soit disposé autrement, on entend par hauteur une orientation dirigée substantiellement suivant une direction verticale.

L'expression « situé au droit de » s'entend de manière générale d'une localisation dans un plan vertical passant par un élément de référence.

Le terme « antérieur » signifie généralement dans la présente description comme « situé plus vers l'avant du véhicule équipé ».

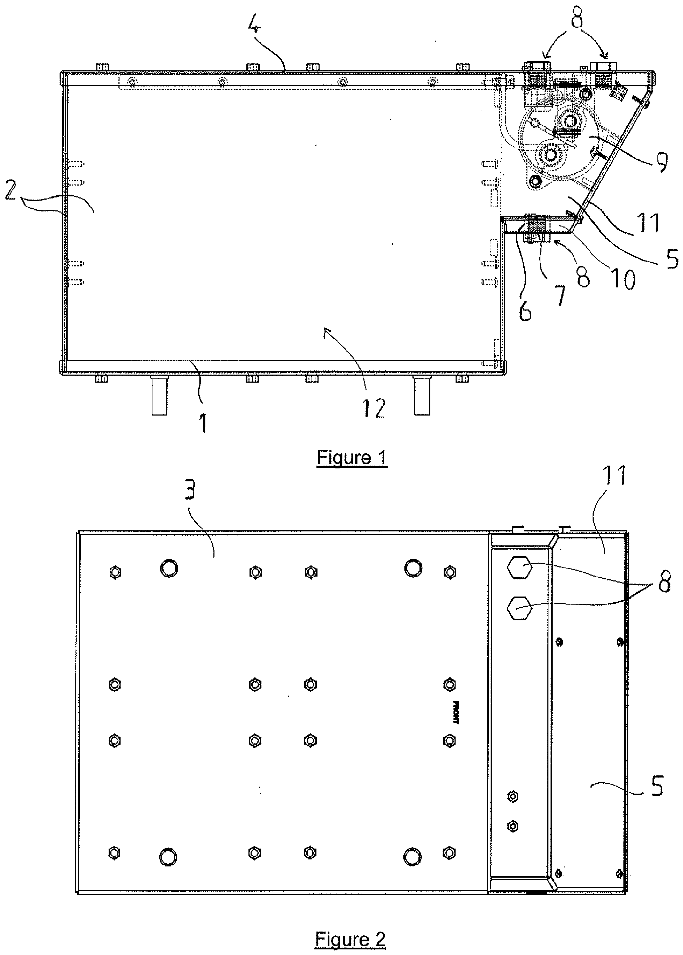

Le dispositif de l'invention comporte dans le cas de l'illustration de la figure 1 un caisson 1 délimitant par une pluralité de parois un volume de stockage 12 de cellules d'accumulation électrique d'une batterie d'accumulateur.

D'une manière générale, le caisson 1 peut comprendre des parois latérales 2, par exemple dirigées essentiellement de manière verticale, une paroi de fond 3 constituant une zone de base du caisson 1 et une paroi de capot 4 située à l'opposé de la paroi de fond 3, de sorte à recouvrir l'ensemble du caisson 1. De préférence, le caisson 1 peut être ouvert par l'intermédiaire d'une paroi de capot 4 au moins en partie amovible. Il est avantageux de constituer tout ou partie des parois du caisson 1 en matériaux métalliques du fait que cette matière est thermiquement conductrice. Par ailleurs, le caisson 1 est constitué de sorte à protéger les cellules stockées dans le volume de stockage 12 contre les intempéries et en particulier contre l'eau ou toute autre forme d'introduction de fluide liquide à l'intérieur du volume de stockage 12. A cet effet, les parois du caisson 1 sont étanches.

Les cellules occupent avantageusement tout le volume disponible dans le volume de stockage. Il peut s'agir d'empilements de niveaux de cellules, par exemple de forme cylindrique, les cellules étant très faiblement espacées latéralement (par exemple de moins de 2 mm) pour accroître la capacité électrique.

Malgré cette concentration et de sorte à favoriser le refroidissement des cellules présentes dans le caisson 1, ce dernier comporte par ailleurs une réservation 5 visible aux figures 1 à 4 et délimitant un volume adjacent au volume de stockage 12. La réservation 5 est le lieu d'implantation d'un ou plusieurs ventilateurs schématisés par le bloc 9, par exemple visible en figure 2. De manière conventionnelle, le ventilateur sera alimenté et commandé par tout moyen courant et des éléments de raccordement électrique peuvent être prévus pour traverser de manière étanche à l'eau, l'une ou l'autres des parois du caisson 1.

Dans le cas représenté, le ventilateur 9 est situé sensiblement au milieu de la dimension longue de l'une des parois latérales.

D'une manière générale, les parois du caisson 1 peuvent être des parois planes et le caisson 1 peut présenter une enveloppe sensiblement ou strictement parallélépipédique-rectangle. Cependant, concernant la réservation 5, elle peut présenter une paroi de base 10 plus étroite suivant une dimension avantageusement dirigée suivant la longueur du véhicule que la dimension équivalente de la paroi opposée qui la délimite, ici au niveau de la paroi de capot 4.

Autrement dit, la réservation 5 est délimitée par une paroi inclinée 11 entre la paroi de base 10 et la paroi de capot 4, la paroi 11 étant inclinée de sorte à produire un évasement de la réservation 5 en direction de la partie haute du caisson 1. De cette façon, on peut favoriser l'écoulement du flux d'air issu du ventilateur 9 vers la partie haute du dispositif pour une communication à l'extérieur décrite plus en détail ci-après.

En effet, pour optimiser le refroidissement induit par le flux d'air forcé généré par le ventilateur 9, la présente invention propose la mise en place d'éléments d'aération pour mettre en communication le volume de stockage 12 et l'extérieur du caisson 1 pour assurer une circulation d'air. Tout en réalisant cette communication pour l'air, la présente invention permet d'interdire l'introduction d'eau vers l'intérieur du caisson 1 grâce à la particularité des éléments d'aération utilisés.

Plus particulièrement, les éléments d'aération 8 peuvent chacun comprendre :
- un passage 6 réalisé par exemple par perçage dans l'une ou l'autre des parois du caisson 1, soit directement au niveau du volume de stockage 12, soit au niveau de la réservation 5 ;
- une membrane 7 réalisant un élément de valve permettant la circulation sélective du fluide. Plus précisément, la membrane 7 est configurée pour autoriser la circulation d'air et au moins une circulation d'air depuis l'intérieur du caisson 1 vers l'extérieur tout en interdisant la circulation d'eau au moins depuis l'extérieur du caisson 1 vers l'intérieur du caisson 1. A titre préféré, on utilise pour la membrane 7 un matériau textile du type étanche à l'eau par exemple un matériau tissé comprenant des fibres hydrophobes. On peut employer une matière à base de tétra-fluoro-éthylène pour former ces fibres. Ainsi, l'invention combine dans un mode de réalisation préféré une circulation d'air forcée et une communication avec l'air ambiant. De cette façon, les calories mises en circulation grâce au flux d'air forcé sont échangées avec l'extérieur de sorte que la présente invention permet d'atteindre moins rapidement ou d'éviter d'atteindre le seuil maximal de fonctionnement en température des cellules.

Les différentes figures montrent un exemple avantageux d'implantation des éléments d'aération 8 dans le caisson 1 de l'invention.

Plus précisément, on peut former au moins un élément d'aération 8 à un niveau de hauteur supérieur du caisson 1, par exemple au travers de la paroi de capot 4 et au moins un élément d'aération 8 sur une paroi située en dessous de la paroi précédente suivant la hauteur du caisson 1.

Dans le cas représenté à la figure 1, une pluralité d'éléments 8 sont situés au travers de la paroi de capot 4 du caisson 1 et une pluralité d'éléments 8 sont situés au niveau de la paroi de base 10 de la réservation 5. Ce cas n'est cependant qu'indicatif.

Toujours à titre préféré mais non limitatif, on peut former deux éléments d'aération 8 en position inférieure, tels que représentés au travers de la paroi de fond 3.

Avantageusement au niveau de la paroi de capot 4, quatre éléments d'aération 8 sont formés avec deux éléments d'aération 8 alignés suivant la direction longitudinale et trois éléments d'aération 8 alignés suivant une direction transversale perpendiculaire à la direction longitudinale, l'ensemble ayant donc une configuration en « L ».

Un élément d'aération 8 est donc situé à l'intersection de ces deux lignes directrices de positionnement des éléments d'aération 8 sur cette paroi supérieure du caisson 1.

Sur la paroi de base 10 ou sur une autre paroi inférieure, on place avantageusement deux éléments d'aération 8 espacés suivant la direction transversale. Préférentiellement, les éléments d'aération 8 ou au moins certains d'entre eux sont situés au droit du ventilateur 9 ou à proximité de la zone au droit du ventilateur 9, c'est-à-dire à proximité immédiate de la sortie du ventilateur 9 en direction du volume de stockage 12.

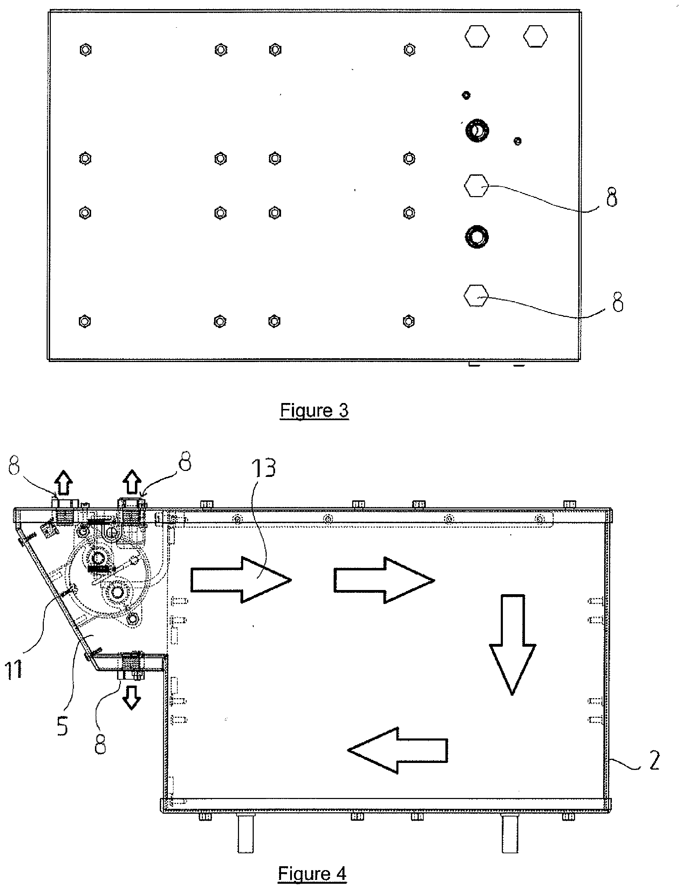

La figure 4 montre un exemple de flux que l'on peut constater grâce à la mise en oeuvre de l'invention. L'exemple n'est pas limitatif. Les illustrations ne représentent pas les cellules implémentées dans le volume de stockage 12. Cependant, ces cellules sont avantageusement parallèles entre elles et maintenues en position par des moyens de partage de volume de stockage 12, position ménageant avantageusement des espaces intercalaires entre les cellules de sorte à autoriser une circulation d'air entre les cellules. A cet effet, suivant les flèches de la figure 4, le générateur est configuré pour diriger un flux d'air forcé suivant une direction longitudinale vers l'intérieur du volume de stockage 12 et avantageusement suivant une orientation horizontale. Le flux 13 ainsi produit subit une déflexion sur la paroi latérale 2 du caisson 1 opposée à la réservation 5 avec dans le cas représenté une orientation vers le bas du caisson 1. En partie basse du caisson 1, le flux 13 a tendance à être réfléchi de sorte à produire un cycle retournant en direction de la réservation 5, l'action des éléments d'aération 8 a pour effet de produire une évacuation au moins partielle du flux d'air.

En même temps, les éléments d'aération 8 interdisent toute pollution intérieure du volume de stockage 12 par de l'eau. Au moyen de la paroi inclinée 11, on favorise la déflexion du flux d'air en cycle dans le caisson 1 vers la zone supérieure de ce dernier de sorte à produire une évacuation privilégiée vers le haut. On notera que, même en l'absence de circulation par le ventilateur 9, la présente invention permet de mettre en oeuvre un effet convectif en disposant d'éléments d'aération 8 disposés à des niveaux de hauteur différents sur la paroi du caisson 1. IL se situe donc préférentiellement immédiatement en avant de la roue arrière 15, par exemple en dessous du niveau de la selle.

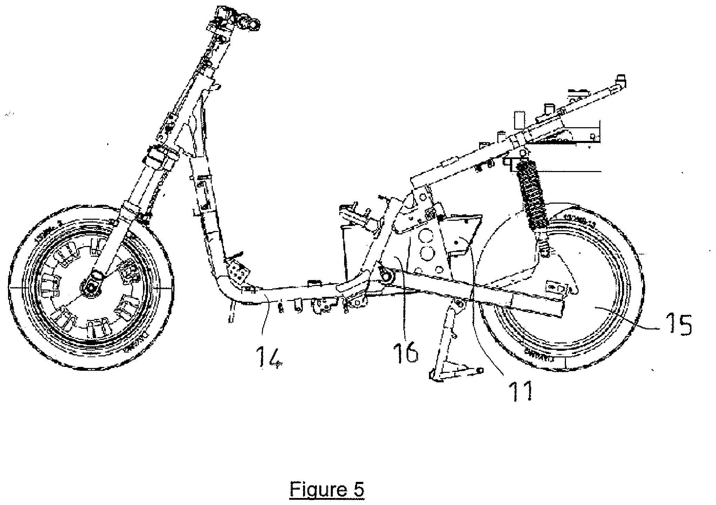

Dans le cas représenté, la réservation 5 est située de sorte à affleurer à la paroi de capot 4 constituant la zone supérieure du caisson 1. La réservation 5 peut occuper toute la hauteur du caisson 1 mais, dans le cas représenté, elle occupe une partie, par exemple environ la moitié, de la hauteur de sorte à limiter l'encombrement du système et pouvoir réaliser une implantation privilégiée au niveau de la roue arrière 15 telle que représentée en figure 5. Comme illustré, la réservation peut être formée à partir de la paroi de capot 14 et être limitée vers le bas, à un niveau de hauteur supérieur à la paroi de fond 3.

En effet, la présente invention a aussi l'avantage de bénéficier d'une implantation privilégiée du dispositif au niveau du châssis 14 du véhicule. A la figure 5, on a représenté un logement 16 situé, sur le châssis 14 sur une zone antérieure à la roue arrière 15. Le logement 16 est configuré pour recevoir le caisson 1 du dispositif de l'invention.

Avantageusement, cette réception s'effectue de manière longitudinale avec la réservation 5 dirigée vers l'arrière de l'ensemble, c'est-à-dire en vis-à-vis de la roue arrière 15. Grâce à cette position, non seulement le dispositif est relativement abrité vis-à-vis des intempéries mais aussi bénéficie d'un emplacement qui est un lieu de turbulences du fait de la rotation de la roue arrière 15. Ainsi, lorsque le véhicule est en roulage, une turbulence d'air périphérique à la réservation 5 se produit de sorte à favoriser des échanges avec le volume de stockage 12 par l'intermédiaire des éléments d'aération 8. Dans ce cadre, on peut constater, éventuellement, contrairement à ce qui est présenté en figure 4 une admission d'air vers l'intérieur du caisson 1 plutôt qu'une évacuation.

On notera que le fait d'implanter les éléments d'aération 8 au niveau de la réservation 5 recevant avantageusement un ventilateur 9 permet de concentrer l'ensemble des moyens d'aération à un seul niveau de l'ensemble du dispositif. On évite par ailleurs à ce sujet toute interférence avec le volume de stockage 12 qui peut par exemple rester parallélépipédique-rectangle sans aucun élément saillant dû à des questions de refroidissement. Cependant, l'invention n'exclut pas le positionnement d'éléments d'aération 8 sur d'autres parois du caisson 1. La puissance du ventilateur peut aussi varier suivant la nécessité de refroidissement, dont le type de cellule.

En outre, l'invention n'exclut pas non plus le recours à des moyens d'échange de chaleur sous forme par exemple d'un échangeur coopérant avec une ou plusieurs des parois du caisson 1.

### REFERENCES

- 1.: Caisson
- 2.: Parois latérales
- 3.: Paroi de fond
- 4.: Paroi de capot
- 5.: Réservation
- 6.: Passage
- 7.: Membrane
- 8.: Elément d'aération
- 9.: Ventilateur
- 10.: Paroi de base
- 11.: Paroi incliné
- 12.: Volume de stockage
- 13.: Flux d'air forcé
- 14.: Châssis
- 15.: Roue arrière
- 16.: Logement

## Revendications

1. Dispositif de stockage de cellules de batterie de véhicule automobile, comportant un caisson (1) à parois étanches à l'eau et à l'air définissant un volume de stockage (12) de cellules, des moyens de refroidissement du volume de stockage (12), les moyens de refroidissement comprenant une pluralité d'éléments d'aération (8) présentant chacun un passage (6) au travers d'une paroi du caisson (1) et une membrane (7) obturant le passage (6), la membrane (7) étant configurée pour autoriser la sortie d'air depuis le caisson (1) vers l'extérieur du caisson (1) et pour interdire l'entrée d'eau dans le caisson (1), et un ventilateur (9),
**caractérisé par le fait que** le ventilateur (9) est logé dans une réservation (5) que comprend le caisson et qui délimite un volume adjacent au volume de stockage (12) et débouchant dans le volume de stockage (12), et en ce la pluralité d'éléments d'aération (8) est disposée sur au moins deux parois différentes de la réservation (5), les éléments d'aération (8) produisant une évacuation au moins partielle de flux d'air généré par le ventilateur (9).

2. Dispositif selon la revendication 1 dans lequel la membrane (7) est en matière textile étanche à l'eau.

3. Dispositif selon l'une des revendications précédentes dans lequel au moins deux éléments d'aération (8) sont disposés à des hauteurs différentes sur le caisson (1).

4. Dispositif selon l'une des revendications précédentes comportant quatre éléments d'aération (8) sur une paroi de capot (4) du caisson (1) et deux éléments d'aération (8) en vis-à-vis et en dessous de la paroi de capot (4).

5. Dispositif selon l'une quelconque des revendications précédentes comportant une pluralité de cellules de batterie juxtaposées dans le volume de réception avec au moins un espace intercalaire entre deux cellules.

6. Dispositif selon l'une quelconque des revendications précédentes dans lequel au moins une paroi du caisson (1) est en un matériau de conductivité thermique supérieure ou égale à 40 Wm⁻¹K⁻¹.

7. Dispositif selon l'une quelconque des revendications précédentes dans lequel au moins une paroi du caisson (1) est métallique.

8. Dispositif selon l'une des revendications précédentes dans lequel la réservation (5) présente une paroi arrière opposée au volume de stockage (12) et inclinée de sorte à produire un évasement de la réservation (5) vers le haut.

9. Dispositif selon l'une des revendications précédentes comprenant au moins un élément d'aération (8) au-dessus du ventilateur (9) et au moins un élément d'aération (8) en dessous du ventilateur (9).

10. Dispositif selon l'une quelconque des revendications précédentes dans lequel au moins un élément d'aération (8) est situé au droit du ventilateur (9).

11. Dispositif selon l'une quelconque des revendications précédentes dans lequel le ventilateur (9) présente un axe de flux moyen horizontal.

12. Véhicule équipé d'un dispositif selon l'une des revendications précédentes.

13. Véhicule selon la revendication 12 dans lequel le dispositif est situé dans un logement (16) du châssis (14) sur une partie antérieure à une roue arrière (15) du véhicule.

14. Véhicule selon la revendication précédente, dans lequel la réservation (5) est située sur une zone postérieure du logement (16).

15. Véhicule selon l'une des trois revendications précédentes du type motocycle à moteur électrique.

## Patentansprüche

1. Vorrichtung zum Aufnehmen von Batteriezellen eines Kraftfahrzeugs, einen Kasten (1) mit wasser- und luftdichten Wänden umfassend, der ein Aufnahmevolumen (12) für die Zellen definiert, Mittel zum Kühlen des Aufnahmevolumens (12), wobei die Mittel zum Kühlen eine Vielzahl von Lüftungselementen (8) umfassen, die jeweils einen Durchlass (6) durch eine Wand des Kastens (1) hindurch aufweisen, und eine Membran (7), die den Durchlass (6) verschließt, wobei die Membran (7) konfiguriert ist, um den Austritt von Luft aus dem Kasten (1) zur Außenseite des Kastens zu erlauben, und um den Eintritt von Wasser in den Kasten (1) zu untersagen, und einen Lüfter (9),
**dadurch gekennzeichnet, dass** der Lüfter (9) in einer Reservierung (5) untergebracht ist, die der Kasten umfasst, und die ein an das Aufnahmevolumen (12) angrenzendes Volumen eingrenzt, und in das Aufnahmevolumen (12) mündet, und **dadurch gekennzeichnet, dass** die Vielzahl von Lüftungselementen (8) auf zumindest zwei verschiedenen Wänden der Reservierung (5) angeordnet ist, wobei die Lüftungselemente (8) zumindest eine partielle Evakuierung des vom Lüfter (9) generierten Luftstroms erzeugen.

2. Vorrichtung nach Anspruch 1, wobei die Membran (7) aus einem wasserdichten Textilmaterial ist.

3. Vorrichtung nach einem der vorstehenden Ansprüche, wobei zumindest zwei Lüftungselemente (8) auf unterschiedlichen Höhen auf dem Kasten (1) angeordnet sind.

4. Vorrichtung nach einem der vorstehenden Ansprüche, vier Lüftungselemente (8) auf einer Abdeckungswand (4) des Kastens (1), und zwei Lüftungselemente (8) gegenüber und unter der Abdeckungswand (4) umfassend.

5. Vorrichtung nach einem der vorstehenden Ansprüche, eine Vielzahl von Batteriezellen umfassend, die in dem Aufnahmevolumen mit zumindest einem Zwischenraum zwischen zwei Zellen nebeneinandergestellt sind.

6. Vorrichtung nach einem der vorstehenden Ansprüche, wobei zumindest eine Wand eines Kastens (1) aus einem Material mit einer Wärmeleitfähigkeit größer oder gleich 40 Wm⁻¹K⁻¹ ist.

7. Vorrichtung nach einem der vorstehenden Ansprüche, wobei zumindest eine Wand eines Kastens (1) metallisch ist.

8. Vorrichtung nach einem der vorstehenden Ansprüche, wobei die Reservierung (5) eine hintere Wand gegenüber dem Aufnahmevolumen (12) aufweist und geneigt ist, um eine Ausweitung der Reservierung (5) nach oben zu erzeugen.

9. Vorrichtung nach einem der vorstehenden Ansprüche, zumindest ein Lüftungselement (8) über dem Lüfter (9) und zumindest ein Lüftungselement (8) unter dem Lüfter (9) umfassend.

10. Vorrichtung nach einem der vorstehenden Ansprüche, wobei sich zumindest ein Lüftungselement (8) auf Höhe des Lüfters (9) befindet.

11. Vorrichtung nach einem der vorstehenden Ansprüche, wobei der Lüfter (9) eine mittlere horizontale Strömungsachse aufweist.

12. Fahrzeug, das mit einer Vorrichtung nach einem der vorstehenden Ansprüche ausgerüstet ist.

13. Fahrzeug nach Anspruch 12, wobei sich die Vorrichtung in einer Aufnahme (16) des Fahrgestells (14) in einem Abschnitt vor einem Hinterrad (15) des Fahrzeugs befindet.

14. Fahrzeug nach dem vorstehenden Anspruch, wobei sich die Reservierung (5) in einer hinteren Zone der Aufnahme (16) befindet.

15. Fahrzeug nach einem der drei vorstehenden Ansprüche in der Art eines Motorrads mit Elektromotor.

## Claims

1. Device for storing battery cells of a motor vehicle, comprising a box (1) having walls impermeable to water and to air and defining a volume (12) for storing cells, means for cooling the storage volume (12), the cooling means comprising a plurality of aeration elements (8) each having a passage (6) through a wall of the box (1) and a membrane (7) blocking the passage (6), the membrane (7) being configured to allow the outlet of air from the box (1) to outside the box (1) and to prevent the intake of water into the box (1), and a fan (9),
**characterised by** the fact that the fan (9) is housed in a reservation (5) that the box comprises and that defines a volume adjacent to the storage volume (12) and opening into the storage volume (12), and in this the plurality of aeration elements (8) is positioned on at least two different walls of the reservation (5), the aeration elements (8) producing an at least partial evacuation of the flow of air generated by the fan (9).

2. Device according to claim 1, wherein the membrane (7) is made of a textile material impermeable to water.

3. Device according to one of the preceding claims, wherein at least two aeration elements (8) are positioned at different heights on the box (1).

4. Device according to one of the preceding claims, comprising four aeration elements (8) on a cover wall (4) of the box (1) and two aeration elements (8) opposite and under the cover wall (4).

5. Device according to any one of the preceding claims, comprising a plurality of battery cells juxtaposed in the receiving volume with at least one dividing space between two cells.

6. Device according to any one of the preceding claims, wherein at least one wall of the box (1) is made of a material having a thermal conductivity greater than or equal to 40Wm⁻¹K⁻¹.

7. Device according to any one of the preceding claims, wherein at least one wall of the box (1) is made of metal.

8. Device according to one of the preceding claims, wherein the reservation (5) has a rear wall opposite to the storage volume (12) and inclined in such a way as to produce a flaring of the reservation (5) upwards.

9. Device according to one of the preceding claims, comprising at least one aeration element (8) above the fan (9) and at least one aeration element (8) below the fan (9).

10. Device according to any one of the preceding claims, wherein at least one aeration element (8) is located vertically in line with the fan (9).

11. Device according to any one of the preceding claims, wherein the fan (9) has a horizontal average flow axis.

12. Vehicle provided with a device according to one of the preceding claims.

13. Vehicle according to claim 12, wherein the device is located in a housing (16) of the chassis (14) on a portion anterior to a rear wheel (15) of the vehicle.

14. Vehicle according to the preceding claim, wherein the reservation (5) is located in a rear zone of the housing (16).

15. Vehicle according to one of the three preceding claims that is a motorcycle having an electric motor.
